# EUROPÄISCHE PATENTSCHRIFT

(11) **EP 2 786 025 B1**
(45) Veröffentlichungstag und Bekanntmachung des Hinweises auf die Patenterteilung: **16.09.2015**
(21) Anmeldenummer: 12797717.1
(22) Anmeldetag: 03.12.2012
(51) Int. Cl.: F15B 1/02, E02F 9/22, F15B 21/14, F15B 1/24

(54) **SYSTEM ZUR VERBESSERUNG DER ENERGIEEFFIZIENZ BEI HYDRAULIKSYSTEMEN, FÜR EIN DERARTIGES SYSTEM VORGESEHENER KOLBENSPEICHER UND DRUCKSPEICHER**
SYSTEM FOR IMPROVING THE ENERGY EFFICIENCY IN HYDRAULIC SYSTEMS, PISTON ACCUMULATOR AND PRESSURE ACCUMULATOR PROVIDED FOR SUCH A SYSTEM
SYSTÈME PERMETTANT D'AMÉLIORER LE RENDEMENT ÉNERGÉTIQUE DE SYSTÈMES HYDRAULIQUES, ET ACCUMULATEUR À PISTON ET ACCUMULATEUR DE PRESSION DESTINÉ AUDIT SYSTÈME

(30) Priorität: 03.12.2011 DE 102011120228
(43) Veröffentlichungstag der Anmeldung: 08.10.2014
(73) Patentinhaber: Hydac Fluidtechnik GmbH, 66280 Sulzbach/Saar (DE)
(72) Erfinder: SCHULZ, Frank, 66440 Blieskastel-Bierbach (DE); BRUCK, Peter, 66484 Althornbach (DE)
(74) Vertreter: Bartels, Martin Erich Arthur
(86) Internationale Anmeldenummer: PCT/EP2012/004974
(87) Internationale Veröffentlichungsnummer: WO 2013/079222

(56) Entgegenhaltungen:
- US-A- 5 971 027
- US-A- 6 145 311

## Beschreibung

Die Erfindung betrifft einen hydropneumatischen Kolbenspeicher für den Einsatz bei einem System zur Verbesserung der Energieeffizienz bei Hydrauliksystemen mit den Merkmalen im Oberbegriff von Anspruch 1 und einen Druckspeicher mit den Merkmalen im Oberbegriff von Anspruch 11.

Angesichts der zunehmenden Verknappung von Ressourcen und den damit zusammenhängenden verstärkten Bemühungen, Energie einzusparen, gewinnen Systeme der vorstehenden Art zunehmend an Bedeutung. So kommen solche Systeme beispielsweise bei hydraulischen Einrichtungen und Anlagen zum Einsatz, bei denen Aktuatoren in Form von Arbeitszylindern vorgesehen sind, die, als Verbraucher Bewegungen gegen Lastkräfte erzeugen oder aus Lastkräften hydraulische Energie zur Einspeicherung in den Hydrospeicher erzeugen. So lässt sich beispielsweise bei Hub-Senk-Anwendungen die potentielle Energie einer angehobenen Last in hydraulische Energie umsetzen, die gespeichert und rezykliert werden kann. Ein weiteres Anwendungsfeld sind hydraulische Hybridsysteme für rotatorische Antriebe. In diesem Fall weist der Aktuator zwischen einem Antriebsmotor und einer Arbeitshydraulik oder einem hydrostatischen Fahrantrieb eine Motor-Pumpen-Einheit auf; die bei entsprechenden Betriebszuständen als Verbraucher oder als Erzeuger hydraulischer Energie zur Einspeicherung und Rezyklierung in den Hydrospeicher arbeitet.

Unabhängig vom Anwendungsfall lässt bei den bekannten Systemen die Effizienz der Energieumsetzung zu wünschen übrig. Eine Ursache hierfür ist die Abhängigkeit der Lade- und Entladeprozesse des Hydrospeichers vom jeweiligen Systemdruck. Genauer gesagt, kann der Hydrospeicher immer nur dann aufgeladen werden, wenn der Systemdruck größer als der im Speicher auf der Gasseite befindliche Gasdruck ist. Wenn der Systemdruck in der jeweiligen Betriebssituation des Aktuators nicht aufgebaut werden kann, besteht keine Möglichkeit, Energie im Speicher aufzunehmen. Der Entladeprozess des Speichers ist der Einschränkung unterzogen, dass immer nur dann Energie aus dem Speicher zurückgespeist werden kann, wenn der Speicherdruck noch größer als der aktuelle Systemdruck ist. Zusätzlich besteht das Problem, dass bei einem Speicherdruck, der größer ist als der aktuell benötigte Systemdruck, die Druckniveaus von Speicher und System durch Ventile ausgeglichen werden müssen, so dass die Energie, die in dem Differenzdruck zwischen Speicherdruck und Systemdruck steckt, durch Drosselverluste verloren geht.

Die US 5 971 027 beschreibt einen Druckspeicher, insbesondere in der Art eines hydropneumatischen Kolbenspeichers ausgebildet, mit einem Speichergehäuse, das endseitig ein Kopfteil und ein Bodenteil aufweist und in dem mindestens ein Speicherkolben längsverfahrbar angeordnet ist, der eine erste Medienseite, insbesondere Gasseite, von einer zweiten Medienseite, insbesondere Fluidseite, trennt, wobei zumindest eine der beiden Medienseiten voneinander getrennte Druckräume in konzentrischer Anordnung zu einer Längsachse des Speichergehäuses aufweist, wobei die jeweiligen Druckräume, die vom Speicherkolben und/oder vom Bodenteil begrenzt sind, eine Volumenänderung erfahren, sofern in einer Relativbewegung von Speicherkolben und Bodenteil zueinander ausgehend von einer Maximalstellung, bei der zumindest einer der Druckräume maximal mit jeweiligem Medium befüllt ist, in Richtung einer Minimalstellung, bei der zumindest der eine Druckraum demgegenüber geringer befüllt ist, das Bodenteil in die Druckräume des Speicherkolbens und der Speicherkolben in die Druckräume des Bodenteils einfährt, wobei alle Druckräume innerhalb des Speichergehäuses mediendicht voneinander separiert sind. Der in der Längsachse des Speichergehäuses angeordnete Druckraum ist von einem dornartigen Teil des Speicherkolbens begrenzt.

Im Hinblick auf diese Problematik stellt sich die Erfindung die Aufgabe, einen Kolbenspeicher und einen Druckspeicher zur Verfügung zu stellen, die eine günstigere Energieumsetzung ermöglichen.

Gemäß dem Patentanspruch 1 ist Gegenstand der Erfindung ein hydropneumatischer Kolbenspeicher, wobei in dem den Speicherkolben axial bewegbar führenden Speichergehäuse mehrere Druckräume gebildet sind, die an unterschiedlich große Wirkflächen an der Fluidseite des Kolbens angrenzen.

Der in der Längsachse des Speichergehäuses angeordnete Druckraum ist von einem topfartigen Teil des Speicherkolbens, insbesondere dessen Innenkolben, umfasst. Der topfartige Teil des Speicherkolbens begrenzt außenumfangsseitig mit einer Zylinderfläche und weiteren Teilen des Speicherkolbens einen weiteren Druckraum.

Weitere Ausgestaltungen des hydropneumatischen Kolbenspeichers sind in den Unteransprüchen 2 bis 9 angegeben.

Der Speicherkolben kann zur Bildung unterschiedlich großer Wirkflächen als Stufenkolben oder topfförmig gestaltet sein und an seiner Fluidseite an Zylinderflächen angrenzende Kolbenteilflächen aufweisen. Das Speichergehäuse kann korrespondierende, an Zylinderflächen angrenzende Gegenflächen aufweisen, die zusammen mit ihnen zugeordneten Kolbenteilflächen jeweils gesonderte Druckräume begrenzen.

Die Wirkflächen am Speicherkolben und die Gegenflächen am Speichergehäuse können in im axialen Abstand voneinander befindlichen Stufen oder Ebenen angeordnet sein.

Zumindest einer, bevorzugt zumindest zwei, der Druckräume können unter Beibehaltung des axialen Abstandes im Innern des Speicherkolbens angeordnet sein.

Die Wirkflächen und die Gegenflächen können in Form von Ringflächen oder Kreisflächen vorgesehen sein, die konzentrisch zur Längsachse des Speichers angeordnet sind.

Es kann ein topfförmiges Bodenteil vorgesehen sein, wobei der Speicherkolben und das Bodenteil überlappende Wandteile aufweisen.

Alle Druckräume können innerhalb des Speichergehäuses mediendicht voneinander separiert sein.

Ein mittlerer Fortsatz des Bodenteils, insbesondere ein Innenkolben, der als Verdrängerkolben konzipiert ist, kann bei einer Relativbewegung von Speicherkolben und Bodenteil zueinander in den topfartigen Teil des Speicherkolbens, insbesondere in dessen Innenkolben, einfahren.

Die Aufgabe wird weiterhin durch einen Druckspeicher mit den Merkmalen von Anspruch 10 gelöst. Eine vorteilhafte Ausführungsform des Druckspeichers geht aus dem Unteranspruch 11 hervor.

Der Druckspeicher, insbesondere in der Art eines hydropneumatischen Kolbenspeichers ausgebildet, weist ein Speichergehäuse auf, das endseitig ein Kopfteil und ein Bodenteil aufweist und in dem mindestens ein Speicherkolben längsverfahrbar angeordnet ist, der eine erste Medienseite, insbesondere eine Gasseite, von einer zweiten Medienseite, insbesondere einer Fluidseite, trennt. Zumindest eine der beiden Medienseiten weist voneinander getrennte Druckräume in konzentrischer Anordnung zu einer Längsachse des Speichergehäuses auf. Die jeweiligen Druckräume, die vom Speicherkolben und/oder vom Bodenteil begrenzt sind, erfahren eine Volumenänderung, sofern in einer Relativbewegung von Speicherkolben und Bodenteil zueinander ausgehend von einer Maximalstellung, bei der zumindest einer der Druckräume maximal mit jeweiligem Medium befüllt ist, in Richtung einer Minimalstellung, bei der zumindest der eine Druckraum demgegenüber geringer befüllt ist, das Bodenteil in die Druckräume des Speicherkolbens und der Speicherkolben in die Druckräume des Bodenteils einfährt. Erfindungsgemäß sind alle Druckräume innerhalb des Speichergehäuses mediendicht voneinander separiert.

Der in der Längsachse des Speichergehäuses angeordnete Druckraum ist von einem topfartigen Teil des Speicherkolbens, insbesondere dessen Innenkolbens, umfasst. Der topfartige Teil des Speicherkolbens begrenzt außenumfangsseitig mit einer Zylinderfläche und weiteren Teilen des Speicherkolbens einen weiteren Druckraum.

Ein mittlerer Fortsatz des Bodenteils, insbesondere ein Innenkolben, der als Verdrängerkolben konzipiert ist, kann bei einer Relativbewegung von Speicherkolben und Bodenteil zueinander in den topfartigen Teil des Speicherkolbens, insbesondere in dessen Innenkolben, einfahren.

Nachstehend ist die Erfindung anhand von in der Zeichnung dargestellten Ausführungsbeispielen im Einzelnen erläutert. Es zeigen:
- Fig. 1: in einem stark schematisch vereinfachten Längsschnitt ein Ausführungsbeispiel eines hydropneumatischen Kolbenspeichers in einer Mehrstufenausführung für den Einsatz bei einem System;
- Fig. 2: eine Prinzipdarstellung, die den Kolbenspeicher von Fig. 1 in Verbindung mit zugehörigen Systemkomponenten des Systems zeigt;
- Fig. 3: den Kolbenspeicher in Verbindung mit einem in Symboldarstellung gezeigten hydraulischen Schaltplan eines Ausführungsbeispiels des Systems für eine Hub-Senk-Anwendung;
- Fig. 4: eine der Fig. 3 entsprechende Darstellung eines abgewandelten Ausführungsbeispiels der Hub-Senk-Anwendung;
- Fig. 5: den Kolbenspeicher in Verbindung mit einem in Symboldarstellung gezeigten hydraulischen Schaltplan für die Anwendung des Systems für ein hydraulisches Hybridsystem für rotatorische Antriebe; und
- Fig. 6: eine erfindungsgemäße alternative Ausführungsform des hydropneumatischen Kolbenspeichers.

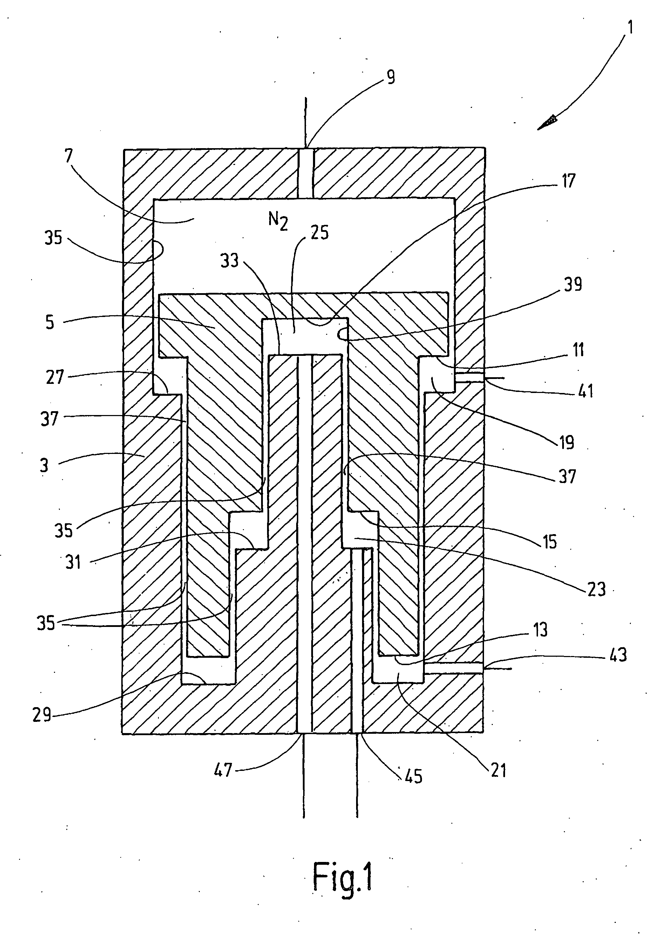

Die Ausführungsformen der Fig. 1 bis 5 dienen lediglich der Erläuterung des Hintergrundes der Erfindung und sind nicht Gegenstand eines der Ansprüche.

Der in Fig. 1 in schematisch vereinfachter Darstellung gezeigte hydropneumatische Kolbenspeicher 1 weist einen in einem Speichergehäuse 3 axial bewegbar geführten Speicherkolben 5 auf, der im Speichergehäuse 3 eine Gasseite 7, an der sich ein Füllanschluss 9 befindet, von fluidseitigen Druckräumen trennt. Der Speicherkolben 5 ist in der Art eines Stufenkolbens derart gestaltet, dass er in Zusammenwirkung mit entsprechend gestuften Teilen des Speichergehäuses 3 fluidseitige Druckräume 19, 21, 23 und 25 begrenzt, die an unterschiedlich große Wirkflächen an der Fluidseite des Speicherkolbens 5 angrenzen. In Fig. 1 sind diese Wirkflächen, von der größtflächigen bis zur kleinstflächigen, mit 11, 13, 15 und 17 bezeichnet. Dabei sind die Wirkflächen 11, 13 und 15 jeweils durch zur Längsachse konzentrische Kreisringflächen gebildet, die die innerste Wirkfläche 17 in Form einer Kreisfläche umgeben. An die Wirkflächen 11, 13 und 15 angrenzende Druckräume 19, 21 bzw. 23 sind durch Gegenflächen 27 bzw. 29 bzw. 31 des Speichergehäuses 3 sowie durch Zylinderflächen 35 des Zylindergehäuses 3 und Zylinderflächen 37 am Speicherkolben 5 begrenzt. Der an die Wirkfläche 17 angrenzende Druckraum 25 ist durch eine Gegenfläche 33 des Speichergehäuses 3 sowie eine Zylinderfläche 39 des Speicherkolbens 5 begrenzt.

Für jeden Druckraum 19, 21, 23, 25 ist ein Fluidanschuss 41, 43, 45 bzw. 47 vorgesehen. Wie die Wirkflächen 11, 13, 15 und 17 am Speicherkolben 5 sind die zugeordneten Gegenflächen 27, 29, 31 bzw. 33 am Speichergehäuse 3 in axial zueinander beabstandeten Stufen angeordnet.

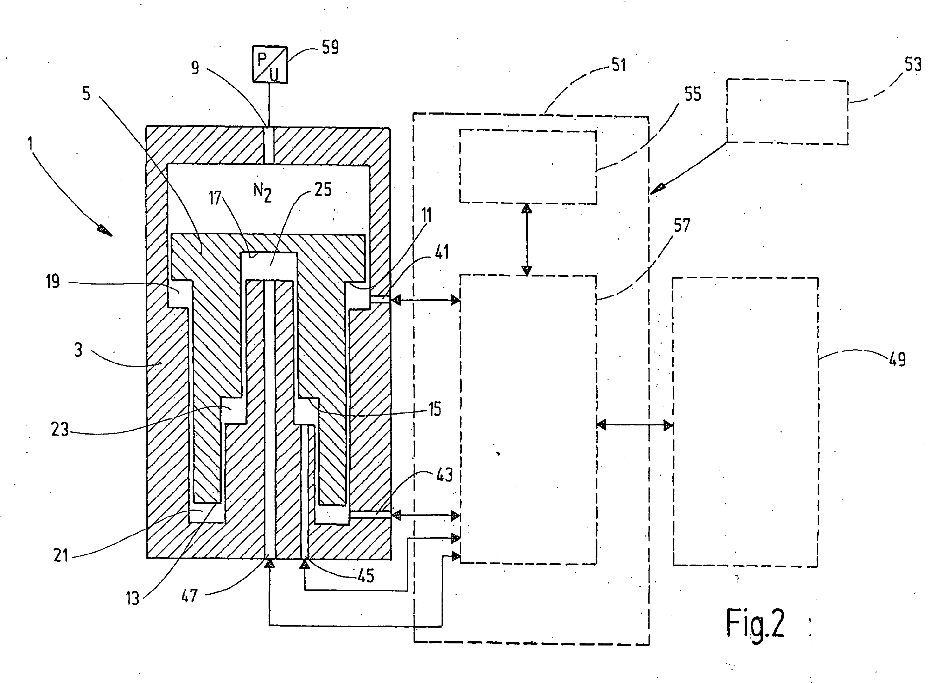

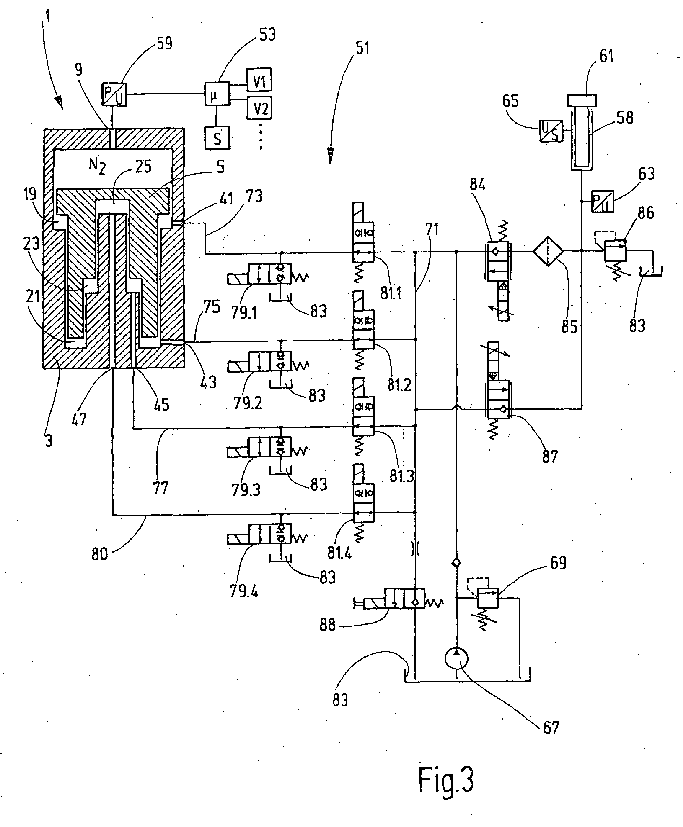

Die Fig. 2 zeigt den Kolbenspeicher 1 in Verbindung mit zugeordneten Systemkomponenten, wobei ein Aktuator 49 in Wirkverbindung mit einer Stellanordnung 51 ist. Wie bereits bemerkt, kann der Aktuator 49 beispielsweise Bestandteil einer Hub-Senk-Anordnung oder eines hydraulischen Hybridsystems für rotatorische Antriebe sein. Der Stellanordnung 51 ist eine Steuerlogik 53 zugeordnet, die mittels einer Steuer- und Regeleinheit 55 eine Ventilanordnung 57 der Stellanordnung 51 betätigt. Die Ventilanordnung 57 weist, wie anhand der Fig. 3 bis 5 näher ausgeführt wird, Schaltventile auf, die ausgewählte Fluidverbindungen zwischen Aktuator 49 und den Fluidanschlüssen 41, 43, 45, 47 des Kolbenspeichers 1 herstellen, um wahlweise die Druckräume 19, 21, 23 und 25 für Lade- oder Entladevorgänge zu aktivieren. Hierfür verarbeitet die Steuerlogik 53 Signale, die von Sensoreinrichtungen geliefert sind und die Betriebszustände von Aktuator 49 und Kolbenspeicher 1 darstellen. Von den Sensoreinrichtungen ist in Fig. 2 lediglich ein Drucksensor 59 am Füllanschluss 9 des Kolbenspeichers 1 gezeigt.

Die Fig. 3 zeigt das System in Verbindung mit einer Hub-Senk-Anordnung, wobei der Aktuator einen Arbeitszylinder 58 zum Heben und Senken einer Last 61 aufweist. Zur Erzeugung der von der Steuerlogik 53 zu verarbeitenden Signale sind am Arbeitszylinder 58 ein den Lastdruck erkennender Drucksensor 63 und ein die Hub-Senk-Geschwin-digkeit ermittelnder Wegsensor 65 vorgesehen. Eine Hydropumpe 67, ausgangsseitig abgesichert durch ein Druckbegrenzungsventil 69, ist mit einer den Systemdruck führenden Hauptleitung 71 der Stellanordnung 51 verbunden. Diese weist für die Verbindung zwischen der Hauptleitung 71 und den Fluidanschlüssen 41, 43, 45 und 47 des Kolbenspeichers 1 jeweils eine Verbindungsleitung 73, 75, 77 und 80 auf. In jeder der Verbindungsleitungen befindet sich eine von der Steuerlogik 53 betätigbare Ventilgruppe, symbolhaft bezeichnet mit v₁, v₂, usw., wobei jede Ventilgruppe aus zwei schnelfschaltenden 2/2-Wege-Ventilen gebildet ist, die mit 79 und 81 bezeichnet und bei den Ventilgruppen v₁ bis v₄ mit dem Index 1 bis 4 gekennzeichnet sind. Über die Wegeventile 81 ist die zugehörige Verbindungsleitung mit dem zugehörigen Fluidanschuss des Kolbenspeichers 1 verbindbar oder sperrbar. Über die Wegeventile 79 ist die jeweilige Verbindungsleitung 73, 75, 77, 80 mit dem Tank 83 verbindbar. Darüber hinaus ist jeder Druckraum 19, 21, 23, 25 mit einem nicht näher gezeigten Druckbegrenzungsventil abgesichert.

Für einen Hubvorgang ist die Hauptleitung 71 über ein Ventil, das zur Steuerung der Hubgeschwindigkeit als proportionales Drosselventil 87 ausgebildet ist, sowie über ein Fluidfilter 85 mit dem Arbeitszylinder 58 verbindbar, der über ein Druckbegrenzungsventil 86 abgesichert ist. Die Hubbewegung erfolgt mit Hilfe der im Kolbenspeicher gespeicherten Energie durch einen Entladevorgang aus einem ausgewählten Druckraum 19, 21, 23, 25 oder aus mehreren ausgewählten Druckräumen, die das passende Druckniveau für die Hubbewegung der Last 61 besitzen. Bei Absenkbewegungen wird die potentielle Energie der Last 61 als hydraulische Energie im Kolbenspeicher 1 gespeichert, indem ein Ladevorgang über ein die Senkgeschwindigkeit einstellendes, anwendungsabhängiges Proportional-Drosselventil 84 und eine ausgewählte Verbindungsleitung 73, 75, 77, 80 oder über mehrere ausgewählte Verbindungsleitungen zu einem betreffenden Fluidanschluss 41, 43, 45, 47 erfolgt, wobei eines oder mehrere der Wegeventile 81 geöffnet ist bzw. sind und Wegeventile 79 nicht gewählter Verbindungsleitungen die Verbindung zum Tank 83 herstellen. Durch diese Verbindung sind nicht gewählte Druckräume 19, 21, 23, 25 des Kolbenspeichers 1 bei Entladevorgängen drucklos und bei Ladevorgängen aus dem Tank 83 nachfüllbar. Ein an der Hauptleitung 71 befindliches Wegeventil 88 ermöglicht es, das System bei Bedarf drucklos zu machen oder zu entleeren.

Im Betrieb wird zum Senken einer Last mit Energie-Rückgewinnung der Lastdruck am Zylinder 58 mittels des Drucksensors 63 an die Steuerlogik 53 übermittelt, ebenso wie der Gasdruck im Speicher 1, der durch den Drucksensor 59 ermittelt ist. Durch diese Informationen kann die Regelung entscheiden, wie die zur Verfügung stehende potentielle Energie des Zylinders 58 optimal in den Speicher 1 zurückgespeist wird. Bei geringen Lasten wird eine große Wirkfläche gewählt, um den Speicher auf ein hohes Druckniveau zu laden. Liegt eine hohe Last 61 am Zylinder 58 an, wird mit einer kleinen Wirkfläche der Speicher 1 geladen. Die Senkgeschwindigkeit der Last wird über das proportionale Drosselventil 84 eingestellt.

Die durch das System bewirkte Lastkompensation kann durch Anwählen und/oder Umschalten der geeigneten Wirkflächen unstetig erfolgen, wobei mit einer genügend großen Anzahl an im Speicher 1 zur Verfügung gestellten Druckstufen eine Auflösung erreichbar ist, um die Last ruckfrei zu senken. Hierbei kann das proportionale Drosselventil 84 mit Druckwaage die Unstetigkeit glätten. Um eine Last 61 bei geladenem Kolbenspeicher 1 mit oder ohne Hilfe der Pumpe 67 zu heben, werden entsprechend der Last 61 am Zylinder 58 in Abhängigkeit vom Gasdruck im Speicher 1 die entsprechende Wirkfläche oder die entsprechenden Wirkflächen gewählt. Um die Bewegung der Last 61 ruckfrei anzufahren, wird vorzugsweise zunächst ein kleineres Druckniveau gewählt. Die Geschwindigkeit zum Anheben der Last 61 wird über das proportionale Drosselventil 87 eingestellt, wobei die Druckdifferenz durch die geeignete Auswahl der Wirkflächen des Speichers 1 möglichst klein gehalten bleibt, so dass eine verlustarme Umwandlung der Speicherenergie in Hubarbeit möglich ist.

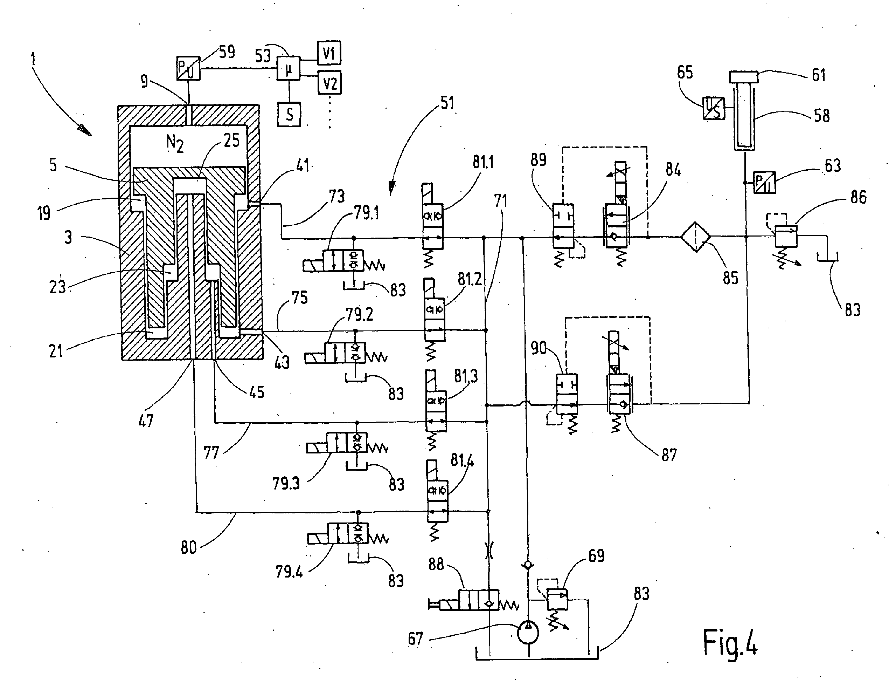

Das Ausführungsbeispiel von Fig. 4 unterscheidet sich vom Beispiel von Fig. 3 lediglich insofern, als an den Proportional-Drosselventilen 84 und 87 jeweils eine Druckwaage 89 bzw. 90 vorgesehen ist, um eine konstante Druckdifferenz am zugeordneten Proportional-Drosselventil 84, 87 zu erzeugen. Dadurch lassen sich bei einem Umschalten der Wirkflächen des Speichers 1 Sprünge der Druckdifferenz am jeweiligen Proportional-Drosselventil 84, 87 kompensieren.

Anstelle der Proportional-Drosselventile 84, 87 können bei Verwendung schnellschaltender Wegeventile 79 und 81 diese auch durch Pulsweitenmodulation angesteuert werden, wodurch, abhängig von der Impulsmodulation oder vom Tastgrad, ein gewünschter mittlerer Volumenstrom einstellbar ist.

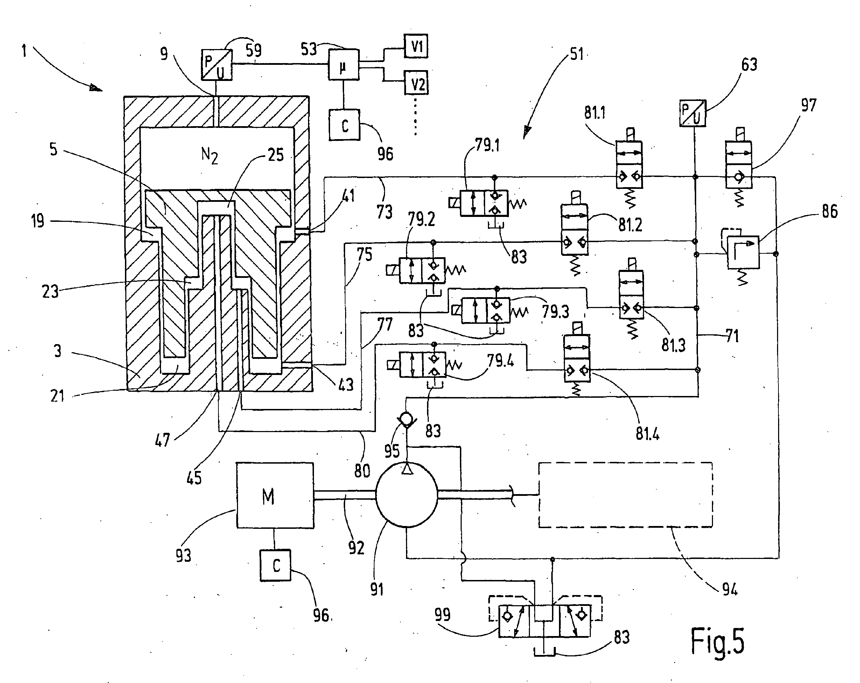

Die Fig. 5 zeigt das System in Anwendung bei einem hydraulischen Hybridsystem für rotatorische Antriebe, wobei als Aktuator eine Motor-Pumpeneinheit 91 vorgesehen ist, deren Pumpenwelle 92 einerseits mit einer Antriebsquelle, beispielsweise einem Verbrennungsmotor 93, und andererseits mit einem rotatorisch antreibbaren Gerät 94 gekuppelt ist. Bei diesem Gerät kann es sich um eine Arbeitshydraulik, einen Fahrantrieb oder dergleichen handeln, d.h. um ein Gerät, das in einem Betriebszustand als Verbraucher hydraulischer Energie und in anderen Betriebszuständen, etwa bei Bremsvorgängen des Fahrantriebs, als Erzeuger hydraulischer Energie ein entsprechendes Drehmoment an der Pumpenwelle 92 erzeugt. Die Druckseite der Motor-Pumpeneinheit 91 ist über ein Rückschlagventil 95 mit einer den Systemdruck führenden Hauptleitung 71 der Stellanordnung 51 verbunden. Diese weist für die Verbindung zwischen der Hauptleitung 71 und den Fluidanschlüssen 41, 43, 45 und 47 des Kolbenspeichers 1 jeweils eine Verbindungsleitung 73, 75, 77, 80 auf. In jeder der Verbindungsleitungen befindet sich eine von der Steuerlogik 53 betätigbare Ventilgruppe, symbolhaft bezeichnet mit v₁, v₂ usw., wobei jede Ventilgruppe aus zwei schnellschaltenden 2/2-Wege-Ventilen gebildet ist, die mit 79 und 81 bezeichnet und bei den Ventilgruppen v₁ bis v₄ mit dem Index 1 bis 4 gekennzeichnet sind. Über die Wegeventile 81.1 bis 81.4 ist die jeweils zugehörige Verbindungsleitung 73, 75, 77, 80 mit dem zugehörigen Fluidanschluss 41, 43, 45 bzw. 47 des Kolbenspeichers 1 verbindbar oder sperrbar. Über die Wegeventile 79.1 bis 79.4 ist die jeweilige Verbindungsleitung mit dem Tank 83 verbindbar.

Zur Erzeugung der von der Steuerlogik 53 zu verarbeitenden Signale sind am Füllanschluss 9 des Kolbenspeichers 1 ein das gasseitige Druckniveau erkennender Drucksensor 59, an der Hauptleitung 71 ein den Systemdruck erkennender Drucksensor 63 und am Antriebsmotor 93 ein Drehzahlsensor 96 vorgesehen. Anhand dieser Signale entscheidet die Steuerlogik 53, welche der Verbindungsleitungen 73, 75, 77 oder 80 oder welche Kombination dieser Verbindungsleitungen die Verbindung zwischen Hauptleitung 71 und dem jeweils zugeordneten Fluidanschluss 41, 43, 45, 47 am Kolbenspeicher 1 herstellt. Dabei erfolgt die Auswahl danach, welcher der Druckräume 19, 21, 23, 25 oder welche Kombination aus diesen Druckräumen für einen Ladevorgang oder Entladevorgang beim jeweils herrschenden Druckniveau des Systemdruckes (Hauptleitung 71) und des Speichers 1 am besten geeignet ist. Bei Entladevorgängen wird die rückgewonnene Energie über ein Schaltventil 97 von der durch ein Druckbegrenzungsventil 86 abgesicherten Hauptleitung 71 an die Saugseite der Motor-Pumpeneinheit 91 zurückgegeben. Bei Ladevorgängen ist das Schaltventil 97 geschlossen, und eine Verbindungsleitung oder mehrere der Verbindungsleitungen 73, 75, 77, 80 sind über die Wegeventile 81.1 bis 81.4 aktiviert, wobei die jeweils zugeordneten Wegeventile 79.1 bis 79.4 geschlossen sind. Andererseits stellen die Wegeventile 79.1 bis 79.4 bei den jeweils nicht aktivierten Verbindungsleitungen 73, 75, 77, 80 die Verbindung zum Tank 83 her, so dass die angeschlossenen, nicht gewählten Druckräume 19, 21, 23 oder 25 des Speichers 1 bei Entladevorgängen drucklos und bei Ladevorgängen aus dem Tank 83 nachfüllbar sind. Bei wechselnden Systemzuständen kann während Ladevorgängen oder Entladevorgängen die jeweils gewählte Kombination der Wirkflächen 11, 13, 15, 17 gewechselt werden. Um die bei Entladevorgängen überschüssige Fluidmenge des Kreislaufs, die aus dem Speicher 1 kommt, von der nun drucklosen Abströmseite der Motor-Pumpeneinheit 91 zum Tank 83 abzuführen, ist ein inverses Wechselventil 99 vorgesehen. Durch dieses ist auch bei Ladevorgängen die Anströmseite der Motor-Pumpeneinheit 91 für Nachfüllvorgänge mit dem Tank 83 verbindbar.

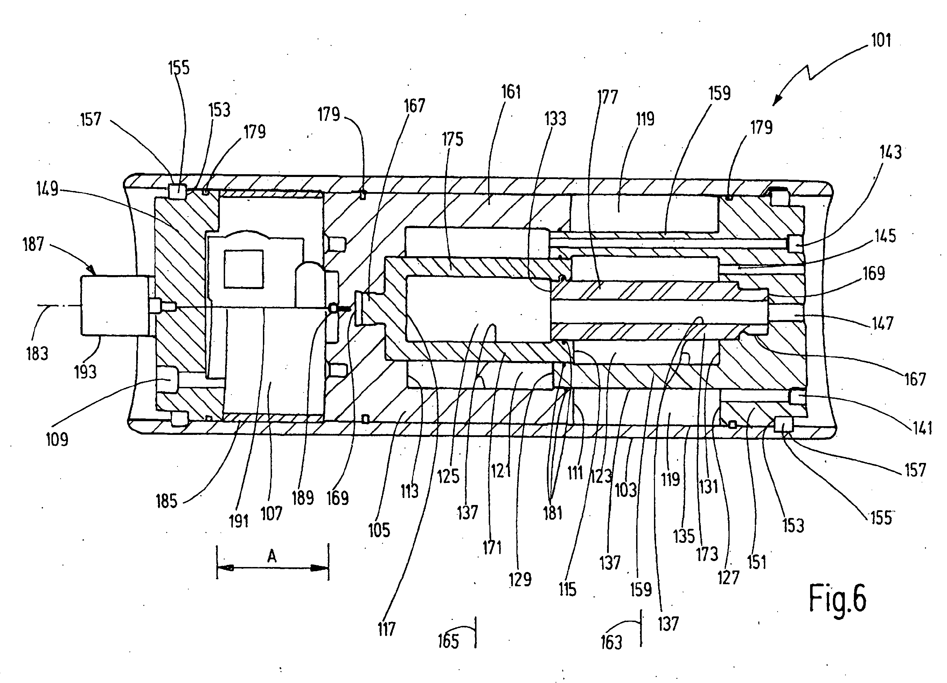

Die in Fig. 6 in schematisch vereinfachter Darstellung gezeigte alternative Ausführungsform des hydropneumatischen Kolbenspeichers 101 weist einen in einem rohrförmigen Speichergehäuse 103 axial bewegbar geführten Speicherkolben 105 auf, der im Speichergehäuse 103 eine Gasseite 107, an der sich ein Füllanschluss 109 in Form einer exzentrisch angeordneten Bohrung befindet, von fluidseitigen Druckräumen 119, 121, 123, 125 trennt. Der Speicherkolben 105 ist zwischen einem hülsenartigen Fortsatz 185 des gasseitigen Kopfteils 149 und einem fluidseitigen Bodenteil 151 bewegbar angeordnet. Das Kopfteil 149 und das Bodenteil 151 sind an Absätzen 153 über Sprengringe 155 an Innenumfangsnuten 157 des Speichergehäuses 103 abgestützt und insoweit festgelegt. Das Bodenteil 151 und der Speicherkolben 105 sind topfförmig mit Wandteilen 159, 161 ausgebildet, wobei sich die Wandteile 159, 161 überlappen und zwei der Druckräume 119, 121 sind von zwei fiktiven Ebenen 163, 163 in der Fig. 6 gezeigten Längsausrichtung der Kolbenanordnung mittig durchgriffen. Sowohl der Speicherkolben 105 als auch das Bodenteil 151 weisen über Zapfen 167 in Ausnehmungen 169 gehaltene Innenkolben 171, 173 auf. Die Innenkolben 171, 173 weisen ebenfalls Wandteile 175, 177 auf, die sich gegenseitig und mit den Wandteilen 159, 161 von Speicherkolben 105 und Bodenteil 151 überlappen.

Zwischen dem Speichergehäuse 103 und jeweils dem Kopfteil 149, dem Speicherkolben 105 und dem Bodenteil 151 sind Radialdichtungen 179 vorgesehen. Weitere Radialdichtungen 181 sind zwischen dem Speicherkolben 105 und dem Bodenteil 151 sowie den Innenkolben 171, 173 angeordnet. Die Druckräume 119, 121, 123, 125 grenzen an unterschiedlich große Wirkflächen an der Fluidseite des Speicherkolbens 105 bzw. seines Innenkolbens 171 an. In Fig. 6 sind diese Wirkflächen von der größtflächigen bis zur kleinstflächigen mit 111, 113, 115, 117 bezeichnet. Dabei sind die Wirkflächen 111, 113, 115 jeweils durch zur Längsachse 183 konzentrische Kreisringflächen gebildet, die die innerste Wirkfläche 117 in Form einer Kreisfläche umgeben. An die Wirkflächen 111, 113, 115 angrenzende Druckräume 119, 121, 123 sind durch Gegenflächen 127, 129, 131 des Bodenteils 151 bzw. seines Innenkolbens 173 sowie durch eine Zylinderfläche 135 des Zylindergehäuses 103 und Zylinderflächen 137 am Speicherkolben 105, dem Bodenteil 151 und den Innenkolben 171, 173 begrenzt.

Der an die Wirkfläche 117 angrenzende Druckraum 125 ist durch eine Gegenfläche 133 des bodenteilseitigen Innenkolbens 173 sowie eine Zylinderfläche 137 des speicherkolbenseitigen Innenkolbens 171 begrenzt. Für jeden Druckraum 119, 121, 123, 125 ist ein Fluidanschluss 141, 143, 145, 147 in Form jeweils einer Bohrung im Bodenteil 151 vorgesehen. An das Kopfteil 149 angrenzend ist eine rohrförmige Hülse 185 als Anschlagsicherung für den Speicherkolben 105 in das Speichergehäuse 103 eingesetzt. Die Hülse 185 kontaktiert außenseitig das Speichergehäuse 103. Weiterhin ist ein Wegmesssystem 187 vorgesehen, um den Abstand A vom Kopfteil 149 zum Speicherkolben 105 jederzeit bestimmen zu können. Dazu ist an einer Öse 189 am Speicherkolben 105 ein Draht 191 befestigt, der aus einer Sensoreinrichtung 193 ausziehbar ist. Ferner kann innerhalb der Hülse 185 eine nicht näher dargestellte Druckmesseinrichtung integriert sein.

## Patentansprüche

1. Hydropneumatischer Kolbenspeicher für ein System zur Verbesserung der Energieeffizienz bei Hydrauliksystemen, mit einem Aktuator (49), der in einem Betriebszustand als Verbraucher hydraulischer Energie und in einem anderen Betriebszustand als Erzeuger hydraulischer Energie arbeitet, und mit einem Hydrospeicher (101), der beim einen Betriebszustand des Aktuators (49) von diesem zur Energiespeicherung aufladbar und beim anderen Betriebszustand für eine Energieabgabe an den Aktuator (49) entladbar ist, wobei mindestens ein Hydrospeicher in Form eines, vorzugsweise unstetig, verstellbaren hydropneumatischen Kolbenspeichers (101) vorgesehen ist, in dem mehrere Druckräume (119, 121, 123, 125), die an unterschiedlich große Wirkflächen (111, 113, 115, 117) an der Fluidseite des Speicherkolbens (105) angrenzen, gebildet sind, und dass eine Stellanordnung (51) vorgesehen ist, die in Abhängigkeit von den jeweiligen auf der Gasseite des Kolbenspeichers (101) und am Aktuator (49) herrschenden Druckniveaus einen ausgewählten Druckraum (119, 121, 123, 125) oder mehrere ausgewählte Druckräume (119, 121, 123, 125) des Kolbenspeichers (101) mit dem Aktuator (49) verbindet, wobei in dem den Speicherkolben (105) axial bewegbar führenden Speichergehäuse (103) mehrere Druckräume (119, 121, 123, 125) gebildet sind, die an unterschiedlich große Wirkflächen (111, 113, 115, 117) an der Fluidseite des Kolbens (105) angrenzen, **dadurch gekennzeichnet, dass** der in der Längsachse (185) des Speichergehäuses angeordnete Druckraum (125) von einem topfartigen Teil des Speicherkolbens (105), insbesondere dessen Innenkolben (171), umfasst ist, und dass der topfartige Teil des Speicherkolbens (105) außenumfangsseitig mit einer Zylinderfläche (137) und weiteren Teilen des Speicherkolbens (105) einen weiteren Druckraum (121) begrenzt.

2. Kolbenspeicher nach Anspruch 1, **dadurch gekennzeichnet, dass** der Speicherkolben (105) zur Bildung unterschiedlich großer Wirkflächen (111, 113, 115, 117) als Stufenkolben oder topfförmig gestaltet ist und an seiner Fluidseite an Zylinderflächen (135, 137, 139) angrenzende Kolbenteilflächen aufweist und dass das Speichergehäuse (103) korrespondierende, an Zylinderflächen (135, 137) angrenzende Gegenflächen (127, 129, 131, 133) aufweist, die zusammen mit ihnen zugeordneten Kolbenteilflächen jeweils gesonderte Druckräume (119, 121, 123, 125) begrenzen.

3. Kolbenspeicher nach Anspruch 1 oder 2, **dadurch gekennzeichnet, dass** Wirkflächen (111, 113, 115, 117) am Speicherkolben (105) und Gegenflächen (127, 129, 131, 133) am Speichergehäuse (103) in im axialen Abstand voneinander befindlichen Stufen oder Ebenen angeordnet sind.

4. Kolbenspeicher nach Anspruch 3, **dadurch gekennzeichnet, dass** zumindest zwei der Druckräume (121, 125) unter Beibehaltung des axialen Abstandes im Innern des Speicherkolbens (105) angeordnet ist.

5. Kolbenspeicher nach einem der Ansprüche 1 bis 4, **dadurch gekennzeichnet, dass** Wirkflächen (111, 113, 115, 117) und Gegenflächen (127, 129, 131, 133) in Form von Ringflächen oder Kreisflächen vorgesehen sind, die konzentrisch zur Längsachse (183) des Speichers angeordnet sind.

6. Kolbenspeicher nach einem der Ansprüche 1 bis 5, **dadurch gekennzeichnet, dass** ein topfförmiges Bodenteil (151) vorgesehen ist, wobei der Speicherkolben (105) und das Bodenteil (151) überlappende Wandteile (159, 161) aufweisen.

7. Kolbenspeicher nach Anspruch 6, **dadurch gekennzeichnet, dass** im Speicherkolben (105) und im Bodenteil (151) Innenkolben (171, 173) vorgesehen sind, wobei sich vorzugsweise die Wandteile (159, 161, 175, 177) der Innenkolben (171, 173), des Speicherkolbens (105) und des Bodenteils (151) überlappen.

8. Kolbenspeicher nach einem der Ansprüche 1 bis 7, **dadurch gekennzeichnet, dass** alle Druckräume (119, 121, 123, 125) innerhalb des Speichergehäuses (103) mediendicht voneinander separiert sind.

9. Kolbenspeicher nach einem der Ansprüche 1 bis 8, **dadurch gekennzeichnet, dass** ein mittlerer Fortsatz des Bodenteils (151), insbesondere ein Innenkolben (173), der als Verdrängerkolben konzipiert ist, bei einer Relativbewegung von Speicherkolben (105) und Bodenteil (151) zueinander in den topfartigen Teil des Speicherkolbens (105), insbesondere in dessen Innenkolben (171), einfährt.

10. Druckspeicher, insbesondere in der Art eines hydropneumatischen Kolbenspeichers ausgebildet, mit einem Speichergehäuse (103), das endseitigein Kopfteil (149) und ein Bodenteil (151) aufweist und in dem mindestens ein Speicherkolben (103) längsverfahrbar angeordnet ist, der eine erste Medienseite, insbesondere Gasseite (107), von einer zweiten Medienseite, insbesondere Fluidseite (119, 121, 123, 125), trennt, wobei zumindest eine der beiden Medienseiten voneinander getrennte Druckräume (119, 121, 123, 125) in konzentrischer Anordnung zu einer Längsachse (185) des Speichergehäuses (103) aufweist, wobei die jeweiligen Druckräume (119, 121, 123, 125), die vom Speicherkolben (105) und/oder vom Bodenteil (151) begrenzt sind, eine Volumenänderung erfahren, sofern in einer Relativbewegung von Speicherkolben (105) und Bodenteil (151) zueinander ausgehend von einer Maximalstellung, bei der zumindest einer der Druckräume (119, 121, 123, 125) maximal mit jeweiligem Medium befüllt ist, in Richtung einer Minimalstellung, bei der zumindest der eine Druckraum (119, 121, 123, 125) demgegenüber geringer befüllt ist, das Bodenteil (151) in die Druckräume (119, 121, 123, 125) des Speicherkolbens (105) und der Speicherkolben (105) in die Druckräume (119, 121, 123, 125) des Bodenteils (151) einfährt, wobei alle Druckräume (119, 121, 123, 125) innerhalb des Speichergehäuses (103) mediendicht voneinander separiert sind, **dadurch gekennzeichnet, dass** der in der Längsachse (185) des Speichergehäuses angeordnete Druckraum (125) von einem topfartigen Teil des Speicherkolbens (105), insbesondere dessen Innenkolben (171), umfasst ist, und dass der topfartige Teil des Speicherkolbens (105) außenumfangsseitig mit einer Zylinderfläche (137) und weiteren Teilen des Speicherkolbens (105) einen weiteren Druckraum (121) begrenzt.

11. Druckspeicher nach Anspruch 10, **dadurch gekennzeichnet, dass** ein mittlerer Fortsatz des Bodenteils (151), insbesondere ein Innenkolben (173), der als Verdrängerkolben konzipiert ist, bei einer Relativbewegung von Speicherkolben (105) und Bodenteil (151) zueinander in den topfartigen Teil des Speicherkolbens (105), insbesondere in dessen Innenkolben (171), einfährt.

## Claims

1. A hydropneumatic piston accumulator for a system for improving the energy efficiency in hydraulic system, having an actuator (49) which, in one operating state, functions as a consumer of hydraulic energy and, in another operating state, functions as a generator of hydraulic energy, and having a hydraulic accumulator (101) which, when in one operating state of the actuator (49), can be charged by the latter for the storage of energy and, when in another operating state, can be discharged for the delivery of energy to the actuator (49), at least one hydraulic accumulator in the form of a, preferably non-continuously, adjustable hydropneumatic piston accumulator (101) being provided in which a number of pressure chambers (119, 121, 123, 125) are formed which are adjacent to effective surfaces (111, 113, 115, 117) of different sizes on the fluid side of the accumulator piston (105), and that an adjustment arrangement (51) is provided which connects a selected pressure chamber (119, 121, 123, 125) or a number of selected pressure chambers (119, 121, 123, 125) of the piston accumulator to the actuator (49) as a function of the respective pressure levels prevailing on the gas side of the piston accumulator (101) and on the actuator (49), there being formed in the accumulator housing (103) guiding the accumulator piston (105) with axial movement a number of pressure chambers (119, 121, 123, 125) which are adjacent to effective surfaces (111, 113, 115, 117) of different sizes on the fluid side of the piston (105), **characterised in that** the pressure chamber (125) disposed in the longitudinal axis (185) of the accumulator housing is encompassed by a cup-shaped part of the accumulator piston (105), in particular the inner piston (171) thereof, and that the cup-shaped part of the accumulator piston (105) delimits a further pressure chamber (121) on the outer circumference with a cylinder surface (137) and additional parts of the accumulator piston (105).

2. The piston accumulator according to Claim 1, **characterised in that**, for the formation of effective surfaces (111, 113, 115, 117) of different sizes, the accumulator piston (105) is designed as a stepped piston or cup-shaped and has partial piston surfaces on its fluid side that are adjacent to cylinder surfaces (135, 137, 139), and that the accumulator housing (103) has corresponding mating surfaces (127, 129, 131, 133) adjacent to cylinder surfaces (135, 137), which mating surfaces, together with partial piston surfaces associated therewith, each delimit separate pressure chambers (119, 121, 123, 125).

3. The piston accumulator according to Claim 1 or 2, **characterised in that** effective surfaces (111, 113, 115, 117) on the accumulator piston (105) and mating surfaces (127, 129, 131, 133) on the accumulator housing (103) are disposed in steps or levels that are located an axial distance apart from one another.

4. The piston accumulator according to Claim 3, **characterised in that** at least two of the pressure chambers (121, 125) are disposed in the interior of the accumulator piston (105) while maintaining the axial distance.

5. The piston accumulator according to any of Claims 1 to 4, **characterised in that** effective surfaces (111, 113, 115, 117) and mating surfaces (127, 129, 131, 133) are provided in the form of annular surfaces or circular surfaces which are concentrically disposed relative to the longitudinal axis (183) of the accumulator.

6. The piston accumulator according to any of Claims 1 to 5, **characterised in that** a cup-shaped bottom part (151) is provided, the accumulator piston (105) and the bottom part (151) having overlapping wall parts (159, 161).

7. The piston accumulator according to Claim 6, **characterised in that** inner pistons (171, 173) are provided in the accumulator piston (105) and in the bottom part (151), the wall parts (159, 161, 175, 177) of the inner pistons (171, 173), of the accumulator piston (105) and of the bottom part (151) preferably overlapping.

8. The piston accumulator according to any of Claims 1 to 7, **characterised in that** all of the pressure chambers (119, 121, 123, 125) within the accumulator housing (103) are separated from one another in a media-tight manner.

9. The piston accumulator according to any of Claims 1 to 8, **characterised in that** a middle extension of the bottom part (151), in particular an inner piston (173) which is designed as a displacement piston, retracts during a relative movement of the accumulator piston (105) and the bottom part (151) towards one another into the cup-shaped part of the accumulator piston (105), in particular into the inner piston (171) thereof.

10. A pressure accumulator, in particular designed in the manner of a hydropneumatic piston accumulator, having an accumulator housing (103) which has a top part (149) and a bottom part (151) at the ends thereof, and in which at least one accumulator piston (103) is disposed such that it is longitudinally displaceable, which piston separates a first media side, in particular a gas side (107), from a second media side, in particular a fluid side (119, 121, 123, 125), at least one of the two media sides having pressure chambers (119, 121, 123, 125) that are separated from one another, disposed concentrically relative to a longitudinal axis (185) of the accumulator housing (103), the respective pressure chambers (119, 121, 123, 125), which are delimited by the accumulator piston (105) and/or by the bottom part (151), undergoing a change in volume provided that the bottom part (151) retracts into the pressure chambers (119, 121, 123, 125) of the accumulator piston (105) and the accumulator piston (105) retracts into the pressure chambers (119, 121, 123, 125) of the bottom part (151) in a relative movement of the accumulator piston (105) and the bottom part (151) towards one another starting from a maximum position in which at least one of the pressure chambers (119, 121, 123, 125) is maximally filled with the respective medium, in the direction of a minimum position in which at least the one pressure chamber (119, 121, 123, 125) is comparatively less filled, all of the pressure chambers (119, 121, 123, 125) being separated from one another in a media-tight manner within the accumulator housing (103), **characterised in that** the pressure chamber (125) disposed in the longitudinal axis (185) of the accumulator housing is encompassed by a cup-shaped part of the accumulator piston (105), in particular the inner piston (171) thereof, and that the cup-shaped part of the accumulator piston (105) delimits a further pressure chamber (121) on the outer circumference with a cylinder surface (137) and additional parts of the accumulator piston (105).

11. The pressure accumulator according to Claim 10, **characterised in that** a middle extension of the bottom part (151), in particular an inner piston (173) designed as a displacement piston, retracts during a relative movement of the accumulator piston (105) and the bottom part (151) towards one another into the cup-shaped part of the accumulator piston (105), in particular into the inner piston (171) thereof.

## Revendications

1. Accumulateur à piston hydropneumatique pour un système d'amélioration de l'efficacité énergétique dans des systèmes hydrauliques, comprenant un actionneur (49), qui, dans un état de fonctionnement, travaille en consommateur d'énergie hydraulique et, dans un autre état de fonctionnement, en producteur d'énergie hydraulique, et comprenant un accumulateur (101) hydraulique, qui, dans un état de fonctionnement de l'actionneur (49), peut être chargé par celui-ci pour accumuler de l'énergie et, dans l'autre état de fonctionnement, peut être déchargé pour céder de l'énergie à l'actionneur (49), dans lequel il est prévu au moins un accumulateur hydraulique sous la forme d'un accumulateur (101) à piston hydropneumatique, réglable, de préférence de manière discontinue, dans lequel sont formés plusieurs espaces (119, 121, 123, 125) de pression, qui sont voisins de surfaces (111, 113, 115, 117) actives de dimensions différentes, du côté du fluide, du piston (125) de l'accumulateur, et en ce qu'il est prévu un agencement (51) de réglage, qui, en fonction des niveaux de pression régnant respectivement du côté du gaz de l'accumulateur (101) à piston et à l'actionneur (49), met un espace (119, 121, 123, 125) de pression sélectionné ou plusieurs espaces (119, 121, 123, 125) de pression sélectionnés de l'accumulateur (101) à piston en communication avec l'actionneur (49), dans lequel, dans l'enveloppe (123) de l'accumulateur, guidant de manière mobile axialement le piston (105) de l'accumulateur, sont formés plusieurs espaces (119, 121, 123, 125) de pression, qui sont voisins de surface (111, 113, 115, 117) actives de dimensions différentes, du côté du fluide, du piston (105), **caractérisé en ce que** l'espace (125) de pression, disposé dans l'axe (185) longitudinal de l'enveloppe de l'accumulateur, est entouré d'une partie en forme de pot du piston (105) de l'accumulateur, notamment de son piston (171) intérieur et **en ce que** la partie en forme de pot du piston (105) de l'accumulateur délimite, du côté du pourtour extérieur, par une surface (137) de cylindre et par d'autres parties du piston (105) de l'accumulateur, un autre espace (121) de pression.

2. Accumulateur à piston suivant la revendication 1, **caractérisé en ce que** le piston (105) de l'accumulateur est, pour la formation de surfaces (111, 113, 115, 117) actives de dimensions différentes, conformé en piston à gradin ou en forme de pot et a, sur son côté de fluide, des surfaces partielles de piston voisines de surfaces (135, 137, 139) de cylindre et **en ce que** l'enveloppe (133) de l'accumulateur a des contre-surfaces (127, 129, 131, 133) correspondantes, voisines des surfaces (135, 137) de cylindre, qui délimitent, ensemble avec des surfaces partielles de piston qui leur sont associées, respectivement des espaces (119, 121, 123, 125) de pression particuliers.

3. Accumulateur à piston suivant la revendication 1 ou 2, **caractérisé en ce que** des surfaces (111, 113, 115, 117) actives du piston (105) de l'accumulateur et des contre-surfaces (127, 129, 131, 133) de l'enveloppe (103) de l'accumulateur sont disposées en des gradins ou des plans se trouvant à distance axiale les uns des autres.

4. Accumulateur à piston suivant la revendication 3, **caractérisé en ce qu'**au moins deux des espaces (121, 125) de pression sont disposés, en conservant la distance axiale, à l'intérieur du piston (105) de l'accumulateur.

5. Accumulateur à piston suivant l'une des revendications 1 à 4, **caractérisé en ce que** les surfaces (111, 113, 115, 117) actives et les contre-surfaces (127, 129, 131, 133) sont prévues sous forme de surfaces annulaires ou de surfaces circulaires, qui sont disposées concentriquement à l'axe (183) longitudinal de l'accumulateur.

6. Accumulateur à piston suivant l'une des revendications 1 à 5, **caractérisé en ce qu'**il est prévu une partie (151) de fond en forme de pot, le piston (105) de l'accumulateur et la partie (151) de fond ayant des parties (159, 161) de paroi qui se chevauchent.

7. Accumulateur à piston suivant la revendication 6, **caractérisé en ce qu'**il est prévu, dans le piston (105) de l'accumulateur et dans la partie (151) de fond, des pistons (171, 173) intérieurs, dans lequel, de préférence, les parties (159, 161, 175, 177) de paroi, des pistons (171, 173) intérieurs, du piston (105) de l'accumulateur et de la partie (151) de fond se chevauchent.

8. Accumulateur à piston suivant l'une des revendications 1 à 7, **caractérisé en ce que** tous les espaces (119, 121, 123, 125) de pression sont séparés les uns des autres d'une manière étanche au fluide à l'intérieur de l'enveloppe (103) de l'accumulateur.

9. Accumulateur à piston suivant l'une des revendications 1 à 8, **caractérisé en ce qu'**un prolongement médian de la partie (151) de fond, notamment un piston (173) intérieur, qui est conçu comme piston déplaceur, entre, lors d'un mouvement relatif du piston (105) de l'accumulateur et de la partie (151) de fond l'un par rapport à l'autre, dans la partie de type en pot du piston (105) de l'accumulateur, notamment dans son piston (171) intérieur.

10. Accumulateur de pression, constitué notamment à la façon d'un accumulateur à piston hydropneumatique, comprenant une enveloppe (103) d'accumulateur, qui a, du côté de l'extrémité, une partie (149) de tête et une partie (151) de fond et dans laquelle au moins un piston (103) d'accumulateur est monté mobile longitudinalement, qui sépare un premier côté pour un milieu, notamment un côté (107) pour du gaz, d'un deuxième côté pour un milieu, notamment un côté (119, 121, 123, 125) pour un milieu, au moins l'un des deux côtés pour du fluide ayant des espaces (119, 121, 123, 125) de pression séparés les uns des autres suivant un agencement concentrique par rapport à un axe (185) longitudinal de l'enveloppe (103) de l'accumulateur, les espaces (119, 121, 123, 125) de pression respectifs, qui sont délimités par le piston (105) de l'accumulateur et/ou par la partie (151) de fond, subissant une variation de volume, pour autant que, dans un mouvement relatif du piston (105) de l'accumulateur et de la partie (151) de fond l'un par rapport à l'autre, à partir d'une position maximum, dans laquelle au moins l'un des espaces (119, 121, 123, 125) de pression est empli au maximum du milieu respectif, en direction d'une position minimum, dans laquelle au moins l'un des espaces (119, 121, 123, 125) de pression est en revanche peu rempli, la partie (151) de fond entre dans les espaces (119, 121, 123, 125) de pression du piston (105) de l'accumulateur et le piston (105) de l'accumulateur entre dans les espaces (119, 121, 123, 125) de pression de la partie (151) de fond, tous les espaces (119, 121, 123, 125) de pression à l'intérieur de l'enveloppe (103) de l'accumulateur étant séparés les uns des autres d'une manière étanche au milieu, **caractérisé en ce que** l'espace (125) de pression, disposé dans l'axe (185) longitudinal de l'enveloppe de l'accumulateur, est entouré d'une partie de type en pot du piston (105) de l'accumulateur, notamment de son piston (171) intérieur, et **en ce que** la partie de type en pot du piston (105) de l'accumulateur délimite, du côté du pourtour extérieur, avec une surface (137) de cylindre et d'autres parties du piston (105) de l'accumulateur, un autre espace (121) de pression.

11. Accumulateur de pression suivant la revendication 10, **caractérisé en ce qu'**un prolongement médian de la partie (151) de fond, notamment un piston (173) intérieur, qui est conçu comme piston déplaceur, entre, lors d'un mouvement relatif du piston (105) de l'accumulateur et de la partie (151) de fond l'un par rapport à l'autre, dans la partie de type en pot du piston (105) de l'accumulateur, notamment dans son piston (171) intérieur.
